# EUROPEAN PATENT SPECIFICATION

(11) **EP 1 721 097 B1**
(45) Date of publication and mention of the grant of the patent: **28.10.2009**
(21) Application number: 05711144.5
(22) Date of filing: 25.02.2005
(51) Int. Cl.: F16L 11/12, F16L 53/00

(54) **ELECTRICALLY HEATABLE CABLING**
ELEKTRISCH BEHEIZBARE KABEL
CABLAGE CHAUFFABLE ELECTRIQUEMENT

(30) Priority: 25.02.2004 SE 0400454
(43) Date of publication of application: 15.11.2006
(73) Proprietor: VOLVO LASTVAGNAR AB, 405 08 Göteborg (SE)
(72) Inventor: SONDEREGGER, Sigurd, S-436 40 Askim (SE); HENSTRÖM, Bengt, S-441 92 Alingsas (SE)
(74) Representative: Fröhling, Werner Otto
(86) International application number: PCT/SE2005/000284
(87) International publication number: WO 2005/080850

(56) References cited:
- US-A- 3 378 673
- US-A- 3 784 785
- US-A- 4 038 519
- US-A- 4 214 147
- US-A1- 2003 079 787
- US-A1- 2003 100 209

## Description

### TECHNICAL FIELD:

The present invention relates to electrically heatable cabling, preferably intended to be used in vehicles.

### BACKGROUND ART:

In vehicles, there are containers for fluids that are used for various functions in the vehicle. In certain cases, there is a need to ensure that these fluids are at a particular temperature, in order for them to work in the way intended. In other cases, it is only important to ensure that the fluids do not freeze. In these cases, a fluid tank can, for example, be provided with a heating device designed to thaw the fluid when it is frozen. When the vehicle is started up, the fluid is thawed by the heating device. In order for the fluid system to function satisfactorily, the liquid in the hose leading from the fluid tank should also be thawed. This requires the hose also to be provided with a heating device in order to thaw fluid that has frozen in the hose.

The present invention can be utilized for heating of various hoses, not just for vehicle applications, but in the following, for the purpose of illustration and not for the purpose of limiting the scope of the invention, it will be described in particular how the invention can be used for heating a hose that carries urea, also called AdBlue, which is used for cleaning exhaust gases originating from a combustion motor. A problem associated with the use of urea is, however, that in cold weather urea can freeze in the container and/or in associated hoses. If the urea freezes, this can in turn mean that urea can not be provided in the way intended. It is therefore necessary to be able to heat the hoses that transport urea.

There are various ways of heating the fluid in a hose. One way is to heat the hose with the cooling water. This means that the heating is delayed until the motor has warmed up, and also that a number of extra hoses, connections, etc, are required, which is expensive and complicated. A simpler way is to heat the hose using electricity.

In addition, there are vehicles that are intended for the transportation of dangerous goods, for which special safety requirements apply. There are national safety requirements drawn up by each individual country; and also international agreements that regulate safety requirements at an international level. One such international agreement is "The European Agreement concerning the International Carriage of Dangerous Goods by Road (ADR)", agreed in Geneva on the 30th of September 1957 under the auspices of UNECE. This agreement has since been updated. The agreement regulates how dangerous goods are to be transported in goods vehicles by road. One of the requirements is that the vehicle's supply voltage must be able to be cut off while it is travelling, for example when the driver activates an emergency cut-off switch in the cab, when the system detects a safety-related occurrence or in the event of an accident. In addition, the electrical cabling must be encapsulated. For certain vehicles, there are also requirements that the electrical cabling must fulfil protection classification IP69K One of the requirements for this protection classification is that all electrical cabling must be completely encapsulated. This encapsulation can be carried out using, for example, corrugated plastic hose.

Vehicles that are to be ADR-classified must usually be specially ordered with special equipment that ensures that the vehicle meets the requirements laid down. In order not to need to have to redesign the whole vehicle when an ADR-classified vehicle is to be manufactured, it is advantageous for as much as possible of the vehicle's standard equipment to meet the requirements of the ADR classification. This reduces the number of components, which simplifies the production. As an ADR-classified component is often more robust than a standard component, this is also advantageous for the quality of the vehicle.

Providing an ADR-classified vehicle with a fluid hose that is heated electrically is a difficult problem. As the fluid hose needs to be able to be connected and disconnected, there must be connectors for the hose and the electrical connection also requires electrical connectors. At the same time, all electrical cabling must be encapsulated so that no part of the cable is unprotected.

There are several known proposals for how a heated fluid hose can be achieved. WO 200238426A, EP 45024 A and DE 29715336 describe systems where a heating cable lies inside the fluid hose. A disadvantage is that such a solution can cause leakage at the connection points where the cable enters the hose. In addition, it is not desirable to lead a cable in urea.

US 5791377A, EP 616166A, EP 1040973A and DE 19844486A describe fluid hoses where the heating cable is integrated in the wall of the hose, and where the leads are provided with some form of special electrical connector for connecting the electrical current, with the electrical connector also being attached to the hose. The disadvantage of these solutions is that they require a special electrical connector. To provide similar systems for a special vehicle, for example a goods vehicle, therefore requires a special electrical connector to be produced. This is an expensive solution. Nor is such a solution particularly robust, as a large electrical connector attached to a narrow hose is a mechanically unsatisfactory solution.

DE 3900821C, EP 1329660A, DE 19844485A, DE 3900821C describe fluid hoses in which the heating cable is integrated in the wall of the hose. The connection of the heating cable can be carried out in a conventional way, which means that the heating cable is unprotected where it comes out of the hose.

In a published United States patent no. 3, 784, 785, there is described a flexible conduit coupler for connecting to a point of use, such as a stationary house trailer, in conditions where the fluid is subjected to freezing temperatures. The coupler includes an elongate flexible heating conduit secured in a side-by-side heat exchange contact with the major portion of the length of a flexible fluid conduit by spaced tape strips. A thermal insulation jacket surrounds a portion of the conduit. An electrical resistance heating element is removably inserted into the heating conduit and is substantially coextensive in length therewith and can be replaced without disturbing the thermal insulation jacket. The ends of the coupler are exposed and provided with flexible protective boots to cover fittings and other hardware not protected by the thermal insulation jacket. An electrical power supply cord having connectors on both ends is optionally also incorporated into the coupler.

In a published United States patent no. 4,214,147, there is described an electric heating system for controlling temperature of pipes to prevent freezing and condensation. In the situation when cold water is carried in an ambient environment that is humid, the system will prevent moisture from condensing o the pipe. In the situation where a pipe is subjected to freezing ambient temperatures, this system will provide heat to prevent freezing of water in the pipe. The electric heating system comprises a corrugated conduit which is slit along one side in the axial direction, and an electrical heater tape wrapped around a pipe to prevent freezing of water in the pipe. The corrugated conduit encloses the pipe and the heater tape is held in place adjacent the pipe within the conduit extending lengthwise along the pipe.

It is therefore desirable to provide an electrically heated fluid hose, in which the electrical cable is completely protected from, for example, mechanical forces or wear and tear.

### DISCLOSURE OF INVENTION:

The object of the invention is therefore to provide an electrically heated fluid hose in which the electrical cable for heating the fluid hose is completely protected.

The solution to this problem according to the invention is described in the characterizing part of claim 1. The other claims contain advantageous embodiments and further developments of the cabling according to the invention.

With cabling for a motor vehicle according to claim 1, comprising a fluid hose, a cable for heating the fluid hose and at least one electrical connector for connecting the cable to an electrical supply, the object of the invention is achieved by the fluid hose and the cable being surrounded by an external protective sheath.

By means of this first embodiment of the cabling according to the invention, cabling is achieved in which a heated fluid hose and an electrical cable are completely enclosed in a protective sheath. The object of this is to fulfil, in a simple way and without expensive special components, the safety requirements that require all electrical cables to be completely protected.

In an advantageous first further development of the cabling according to the invention, the fluid hose comprises connectors. The advantage of this is that the cabling can be connected to and disconnected from a fluid system in a simple way.

In an advantageous second further development of the cabling according to the invention, the protective sheath comprises at least one corrugated plastic hose and at least one connector. The advantage of this is that the protective sheath can be constructed from inexpensive standard components.

In an advantageous third further development of the cabling according to the invention, the said hose connector and said electrical connector are separate from each other. The advantage of this is that inexpensive standard electrical connectors and standard hose connectors can be used.

In an advantageous fourth further development of the cabling according to the invention, the cabling comprises a sealing element that seals the end sections of the fluid hose between a hose connector and said protective sheath. The advantage of this is that the sealing element means that the hose is completely enclosed by a protective sheath without expensive special components being required.

In an advantageous fifth further development of the cabling according to the invention, the cabling comprises a sealing element that forms a seal directly against a corrugated hose. The advantage of this is that a simple seal is obtained.

### BRIEF DESCRIPTION OF DRAWINGS

The invention will be described in greater detail in the following, with reference to embodiments that are shown in the attached drawings, in which
- Figure 1: shows a first embodiment of cabling according to the invention in cross-section,
- Figure 2: shows the second embodiment of cabling according to the invention, and
- Figure 3: shows a sealing element for cabling according to the invention.

### MODE(S) FOR CARRYING OUT THE INVENTION

The embodiments of the invention and further developments described in the following are only to be regarded as examples and are in no way to limit the protection provided by the patent claims. In the embodiments described here, the same reference numerals in the different figures refer to the same type of component. Each component is therefore not described in detail in all the embodiments.

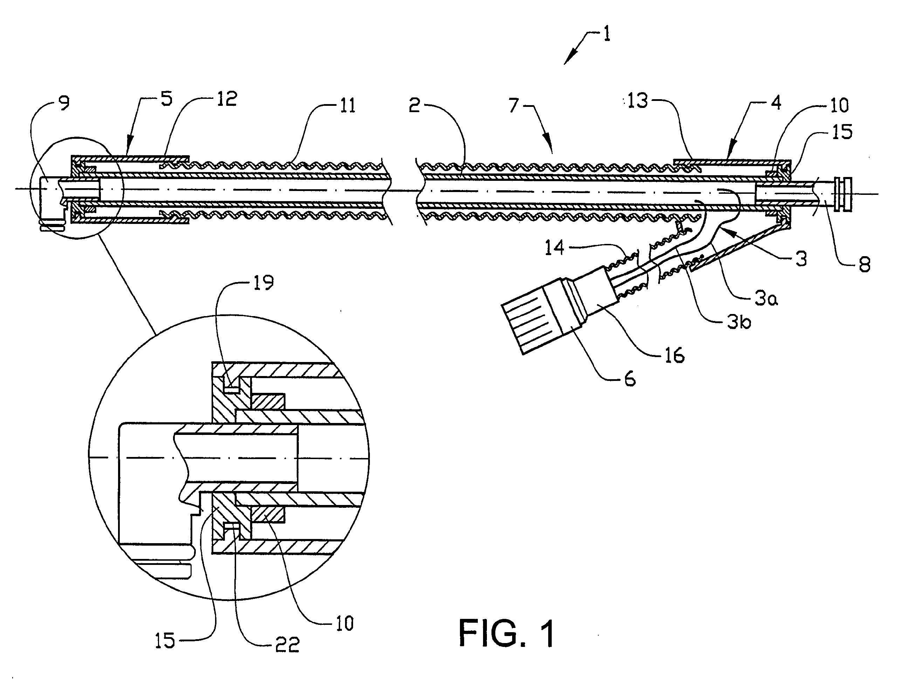

Figure 1 shows cabling 1 according to the invention in cross-section, comprising a fluid hose 2, for example made of rubber, with integrated heating cable 3 for heating the hose 2. The hose 2 and the heating cable 3 are enclosed in a protective sheath 7. In this example, the heating cable 3 consists of two leads 3a, 3b which are embedded in the wall of the hose 2. At the first end section 4 of the cabling, the heating cable 3 is separated from the hose 2 so that it can be led to the electrical connector 6. At the other end section 5 of the cabling, the heating cable 3 is separated from the hose 2 so that the leads 3a and 3b can be connected together to create a closed circuit (not shown). It is, of course, also possible to use a separate cable that is attached to the outside of the hose or that lies loose inside the protective sheath 7.

The hose 2 is provided with hose connectors 8, 9 that are attached to the hose by means of locking rings 10. The hose connectors 8 and 9 are a straight and angled connector respectively, designed to be connected to a matching connector. They can, for example, be hose-mounted connectors or connectors mounted on other units, such as a pump, a vaporizer or a tank. Other types of connector are also possible where required. It is also possible to connect the hose 2 directly to a stub pipe on a unit, for example on a pump, where such is desirable.

The protective sheath 7 of the cabling is here constructed of a system with corrugated plastic hoses and associated connectors. The cabling that is shown in Figure 1 comprises a hose 11 with an internal cross-section that exceeds the external cross-section of the hose 2. In addition, the cabling comprises an intermediate piece 12, a branching piece 13 and a hose 14 that takes the leads 3a, 3b to the electrical connector 6. The hose 11 and the hose 14 have here different cross-sections, as the heating cable 3 has a smaller cross-section than the hose 2. In order to achieve a seal between the connectors 12, 13 and the hose 2, each end section comprises a sealing element 15. The sealing element 15 can be a standardized bushing element in the form of a rubber bushing or a membrane bushing, for example of the type that is used as a cable bushing in electrical apparatuses. This means that all the cabling is constructed of standard components, which means that the finished cabling is simple and inexpensive to assemble. It is also possible for the sealing element 15 to be manufactured specially when a standardized sealing element is not suitable.

Each opening in each connector is provided with an inner projecting collar 19 in the vicinity of the opening. This collar is designed to hold the corrugated hose fixed in the connector. A connector consists of two halves that are snapped together during assembly. This means that the collars in each half combine to hold the corrugated hose fixed in the longitudinal direction, as the collars interact with a corrugation in the corrugated hose. The sealing element 15 is therefore advantageously provided with a groove 22 that fits the collar 19 of the connector in order, in this way, to fix the sealing element in the connector. The sealing element can be constructed in several ways, but an advantageous embodiment is a saucer-shaped element with an opening 23 in the middle that corresponds to the external diameter of the hose connector where it is connected to the fluid hose 2 and with a groove 22 in the edge surface that corresponds to the collar 19 in the connector. The electrical connector 6 also comprises a connector 16 with a collar for holding the corrugated hose fixed in position. It is, of course, also possible to integrate the sealing element in a connector, that is to design the connector in such a way that an opening is designed to fit and make a seal directly against a hose connector.

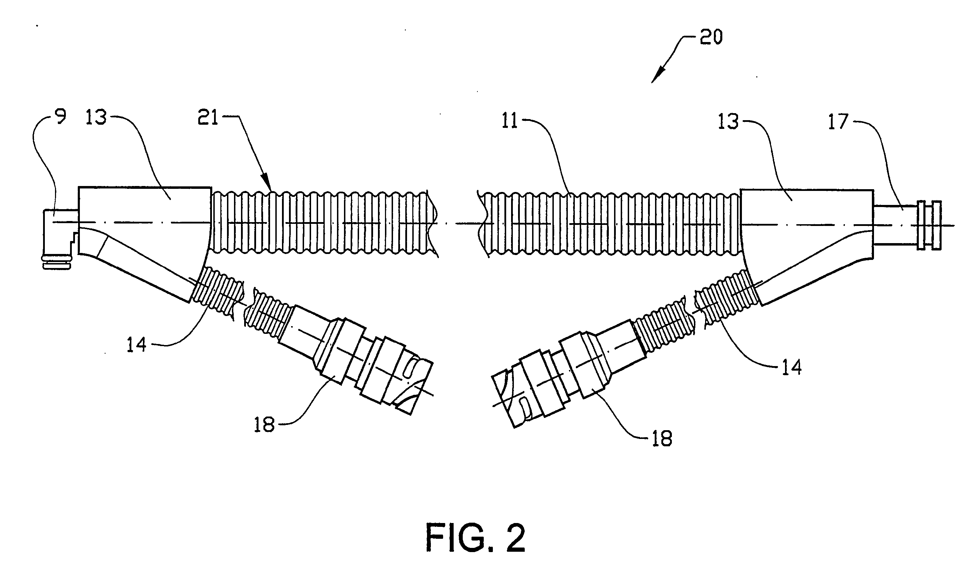

Figure 2 shows another embodiment of cabling 20 according to the invention. This cabling 20 is constructed in a similar way to the cabling 1 described above. The cabling 20 is not shown in cross section, for which reason the enclosed components are not shown. It is, however, constructed from the same type of standard components as in Figure 1 and has thus the same reference numerals.

The cabling 20 comprises a fluid hose 2 with integrated heating cable 3 for heating the hose 2. The hose 2 and the heating cable 3 are enclosed in a protective sheath 21. In this example, the heating cable 3 is separated from the hose 2 at both ends of the hose so that the cable can be taken to the respective electrical connectors 18. An electrical connector is used here at each end of the cabling, for example to take current to an additional heating circuit.

The hose 2 is here provided with hose connectors 9 and 17 which are attached to the hose by means of locking rings 10. The hose connector 9 is an angled connector, and the hose connector 17 is a straight connector for making a connection to, for example, a pump or other cabling.

The protective sheath 21 of the cabling is also here constructed of a system with corrugated plastic hose and associated connectors. The protective sheath 21 consists of a hose 11, two branching pieces 13 and two hoses 14 that lead the heating cable 3 to the electrical connectors 18. In order to achieve a seal between the two connectors 13 and the hose 2, each end section comprises a sealing element 15, as described above.

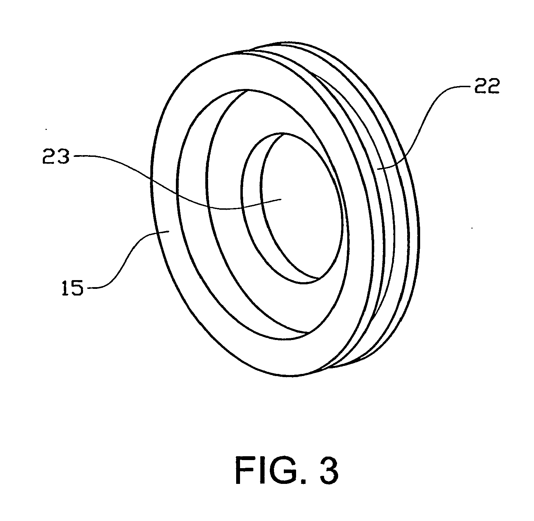

Figure 3 shows a sealing element 15 for making a seal between a connector 12, 13 and the hose 2. The sealing element 15 is here designed as a saucer-shaped element with an opening 23 in the middle that corresponds to the external diameter of a hose connector where it is connected to the fluid hose and with a groove 22 in the edge surface that matches the collar 19 in a connector. The sealing element 15 can have a recess in one side surface that is designed to fit against the hose 2. In this way, the level of sealing is increased. The sealing element 15 makes it possible to provide cabling that combines a system with corrugated plastic hose and associated connectors, normally intended for electrical cabling, with a fluid hose and a heating cable. The advantage of this system is that it is constructed of inexpensive standard components.

The mounting of a sealing element 15 is carried out in the following way. The part of the hose connector that makes a connection with the fluid hose is passed through the opening 23 and into the fluid hose 2. When a membrane bushing is used as sealing element, the hose connector is inserted through the membrane using a suitable tool. Thereafter the fluid hose is fixed onto the hose connector with the locking ring 10. The fluid hose advantageously makes contact with the sealing element 15. This means that a sound seal is achieved between the fluid hose 2 and the protective sheath 7. The sealing element 15 is advantageously made of a rigid or slightly flexible material, such as a polymer or rubber.

In certain cases, the fluid hose is not provided with a hose connector but instead the fluid hose is intended to be connected directly to, for example, a stub pipe on a tank. In these circumstances, the sealing element 15 is designed in such a way that the opening 23 in the sealing element is matched to the external diameter of the fluid hose 2. This means that the hose protrudes through the sealing element, while at the same time a sound seal is obtained between the fluid hose and a connector. In certain cases, it is advantageous to use a sealing element that forms a seal directly between the fluid hose 2 and the protective sheath 7, in particular when only a straight connection is required.

It is also possible to design special connectors that are specially designed to form a seal with a fluid hose, although this is a considerably more expensive and less flexible solution. Instead of a number of special connectors, it is now sufficient to have a special sealing element. Another advantage of a separate sealing element is associated with the assembly. The sealing element is mounted on the fluid hose in such a way that a complete fluid hose with sealing element and separated cables can be supplied to the assembly point, for example a cable loom manufacturer, for assembly of the cabling. This means that the cable loom manufacturer does not need to have special connectors, but instead can manage with the normal standard range. This is also advantageous in the event of a service, where the workshop only has standard components available.

The invention is not to be regarded as being limited to the embodiments described above, a number of additional variations and modifications being possible within the framework of the following patent claims. The cabling can, for example, not only be used for vehicles, but also for other applications in which a hose that is to be heated must be completely encapsulated.
- 1: cabling
- 2: fluid hose
- 3: heating cable
- 3a, 3b: leads
- 4: first end section
- 5: second end section
- 6: electrical connector female
- 7: protective sheath
- 8: straight connector
- 9: angled connector
- 10: locking ring
- 11: corrugated hose
- 12: intermediate piece
- 13: branching piece
- 14: corrugated hose
- 15: sealing element
- 16: connector on the electrical connector
- 17: hose connector to pump
- 18: electrical connector male
- 19: collar
- 20: cabling
- 21: protective sheath
- 22: groove
- 23: opening

## Claims

1. Cabling (1; 20) for a motor vehicle, comprising a fluid hose (2), a cable (3) for heating the fluid hose (2) and at least one electrical connector (6; 18) for connecting the cable (3) to an electrical supply,
wherein the fluid hose (2) and the cable (3) are completely enclosed in an external protective sheath (7; 21), which protective sheath (7; 21) comprises a first hose (11) having an internal cross-section that exceeds the external cross-section of the fluid hose (2),
wherein at one or two end sections (4) of the cabling (1; 20) the cable (3) is separated from the fluid hose (2) within a branching piece (13) and led through a second hose (14) to the at least one electrical connector (6, 18), and
wherein the external protective sheath (7; 21) comprises the first hose (11), said branching piece (13) and said second hose (14),
wherein the branching piece (13) is arranged bebween the first hose (11) and the second hose (14).

2. Cabling as claimed in claim 1, **characterized in that** the fluid hose (2) comprises at least one hose connector (8, 9, 17) for connecting the fluid hose to a matching hose connector.

3. Cabling as claimed in claim 1 or 2, **characterized in that** the protective sheath (7; 21) comprises at least one corrugated hose (11, 14), such as a plastic hose, and at least one connector (12, 13, 16).

4. Cabling as claimed in claim 2 or 3, **characterized in that** said connector (8, 9, 17) and said electrical connector (6, 18) are separate from each other.

5. Cabling as claimed in any one of the claims 1 to 4, **characterized in that** the cabling (1; 20) comprises a sealing element (15) that forms a seal between the end sections (4, 5) of the fluid hose and said protective sheath (7; 21).

6. Cabling as claimed in claim 5, **characterized in that** the sealing element (15) is provided with a groove (22) for interacting with a collar (19) in a connector (12, 13, 16).

7. Cabling as claimed in claim 5, **characterized in that** the sealing element (15) is provided with at least one groove (22) for interacting with an inner surface in a corrugated hose (11, 14).

8. Cabling as claimed in any one of the claims 5 to 7, **characterized in that** the sealing element (15) is constructed at least partially of a flexible material, such as a polymer or rubber.

9. Cabling as claimed in any one of the claims 1 to 8, **characterized in that** the cable (3) is integrated in the fluid hose (2).

10. Cabling as claimed in any one of the claims 1 to 8, **characterized in that** the cable (3) is placed between the fluid hose (2) and the protective sheath (7; 21).

## Patentansprüche

1. Verkabelung (1; 20) für ein Kraftfahrzeug, mit einem Fluidschlauch (2), einem Kabel (3) zur Beheizung des Fluidschlauchs (2) und wenigstens einem elektrischen Verbinder (6, 18) zur Verbindung des Kabels (3) mit einer elektrischen Versorgung,
wobei der Fluidschlauch (2) und das Kabel (3) vollständig in einer äußeren Schutzhülle (7; 21) eingeschlossen sind, wobei die Schutzhülle (7; 21) einen ersten Schlauch (11) umfasst, der einen inneren Querschnitt aufweist, der den äußeren Querschnitt des Fluidschlauchs (2) überschreitet,
wobei an einem oder zwei Endabschnitten (4) der Verkabelung (1; 20) das Kabel (3) von dem Fluidschlauch (2) innerhalb eines Abzweigstücks (13) getrennt ist und durch einen zweiten Schlauch (14) zu dem wenigstens einen elektrischen Verbinder (6, 18) geführt ist, und
wobei die äußere Schutzhülle (7, 21) den ersten Schlauch (11), das Abzweigstück (13) und den zweiten Schlauch (14) umfasst,
wobei das Abzweigstück (13) zwischen dem ersten Schlauch (11) und dem zweiten Schlauch (14) angeordnet ist.

2. Verkabelung nach Anspruch 1, **dadurch gekennzeichnet, dass** der Fluidschlauch (2) wenigstens einen Schlauchverbinder (8, 9, 17) zur Verbindung des Fluidschlauchs mit einem passenden Schlauchverbinder umfasst.

3. Verkabelung nach Anspruch 1 oder 2, **dadurch gekennzeichnet, dass** die Schutzhülle (7, 21) wenigstens einen gewellten Schlauch (11, 14), z.B. einen Kunststoffschlauch, und wenigstens einen Verbinder (12, 13, 16) umfasst.

4. Verkabelung nach Anspruch 2 oder 3, **dadurch gekennzeichnet, dass** der Verbinder (8, 9, 17) und der elektrische Verbinder (6, 18) voneinander getrennt sind.

5. Verkabelung nach einem der Ansprüche 1 bis 4, **dadurch gekennzeichnet, dass** die Verkabelung (1, 20) ein Dichtungselement (15) umfasst, das eine Dichtung zwischen den Endabschnitten (4, 5) des Fluidschlauchs und der Schutzhülle (7; 21) bildet.

6. Verkabelung nach Anspruch 5, **dadurch gekennzeichnet, dass** das Dichtungselement (15) mit einer Nut (22) für eine Zusammenwirkung mit einem Bund (19) in einem Verbinder (12, 13, 16) versehen ist.

7. Verkabelung nach Anspruch 5, **dadurch gekennzeichnet, dass** das Dichtelement (15) mit wenigstens einer Nut (22) für eine Zusammenwirkung mit einer Innenfläche in einem gewellten Schlauch (11, 14) versehen ist.

8. Verkabelung nach einem der Ansprüche 5 bis 7, **dadurch gekennzeichnet, dass** das Dichtelement (15) wenigstens teilweise aus flexiblem Material gebildet ist, wie z.B. einem Polymer oder Gummi.

9. Verkabelung nach einem der Ansprüche 1 bis 8, **dadurch gekennzeichnet, dass** das Kabel (3) in den Fluidschlauch (2) integriert ist.

10. Verkabelung nach einem der Ansprüche 1 bis 8, **dadurch gekennzeichnet, dass** das Kabel (3) zwischen dem Fluidschlauch (2) und der Schutzhülle (7; 21) platziert ist.

## Revendications

1. Câblage (1 ; 20) pour véhicule à moteur, comprenant un tuyau souple pour fluide (2), un câble (3) destiné à chauffer le tuyau souple pour fluide (2) et au moins un raccord électrique (6 ; 18) pour raccorder le câble (3) à une alimentation électrique,
dans lequel le tuyau souple pour fluide (2) et le câble (3) sont entièrement enfermés dans une gaine de protection extérieure (7 ; 21), laquelle gaine de protection (7 ; 21) comprend un premier tuyau souple (11) ayant une section intérieure en coupe qui dépasse la section extérieure en coupe du tuyau souple pour fluide (2),
dans lequel au niveau d'un ou de deux tronçons d'extrémité (4) du câblage (1 ; 20) le câble (3) est séparé du tuyau souple pour fluide (2) dans une pièce de dérivation (13) et aboutit à travers un second tuyau souple (14) à au moins un raccord électrique (6, 18), et
dans lequel la gaine de protection extérieure (7 ; 21) comprend le premier tuyau souple (11), ladite pièce de dérivation (13) et ledit second tuyau souple (14),
dans lequel la pièce de dérivation (13) est agencée entre le premier tuyau souple (11) et le second tuyau souple (14).

2. Câblage selon la revendication 1, **caractérisé en ce que** le tuyau souple pour fluide (2) comprend au moins un raccord de tuyau souple (8, 9, 17) destiné à raccorder le tuyau souple pour fluide à un raccord de tuyau souple correspondant.

3. Câblage selon la revendication 1 ou 2, **caractérisé en ce que** la gaine de protection (7 ; 21) comprend au moins un tuyau souple ondulé (11, 14), tel qu'un tuyau souple en matière plastique, et au moins un raccord (12, 13, 16).

4. Câblage selon la revendication 2 ou 3, **caractérisé en ce que** ledit raccord (8, 9, 17) et ledit raccord électrique (6, 18) sont séparés l'un de l'autre.

5. Câblage selon l'une quelconque des revendications 1 à 4, **caractérisé en ce que** le câblage (1 ; 20) comprend un élément d'étanchéification (15) qui forme un joint entre les tronçons d'extrémité (4, 5) du tuyau souple pour fluide et de ladite gaine de protection (7 ; 21).

6. Câblage selon la revendication 5, **caractérisé en ce que** l'élément d'étanchéification (15) est muni d'une gorge (22) destinée à interagir avec un collier (19) d'un raccord (12, 13, 16).

7. Câblage selon la revendication 5, **caractérisé en ce que** l'élément d'étanchéification (15) est muni d'au moins une gorge (22) destinée à interagir avec une surface intérieure d'un tuyau souple ondulé (11, 14).

8. Câblage selon l'une quelconque des revendications de 5 à 7, **caractérisé en ce que** l'élément d'étanchéification (15) est constitué au moins partiellement d'un matériau souple, tel qu'un polymère ou du caoutchouc.

9. Câblage selon l'une quelconque des revendications 1 à 8, **caractérisé en ce que** le câble (3) est intégré dans le tuyau souple pour fluide (2).

10. Câblage selon l'une quelconque des revendications 1 à 8, **caractérisé en ce que** le câble (3) est placé entre le tuyau souple pour fluide (2) et la gaine de protection (7 ; 21).
